# EUROPEAN PATENT APPLICATION

(11) **EP 2 521 052 A1**
(43) Date of publication of application: **07.11.2012**
(21) Application number: 12166457.7
(22) Date of filing: 02.05.2012
(51) Int. Cl.: G06F 17/30, G06F 3/023

(54) **Handheld electronic device and method for calibrating input of webpage address**

(30) Priority: 03.05.2011 US 201161481749 P
(71) Applicant: HTC Corporation, Taoyuan County 330 (TW)
(72) Inventor: Tseng, Te-Pei, 330 Taiwan County (TW); Wu, Kun-Da, 330 Taoyuan County (TW)
(74) Representative: Granleese, Rhian Jane

(57) **Abstract**

A method for calibrating an input of webpage address used in a handheld electronic device is provided. The handheld electronic device comprises a touch display unit, a storage unit for storing a plurality website address data and a processing unit being electrically connected to the touch display unit and the storage unit. The method comprises the steps outlined in the sentences that follow. At least one character is received from the touch display unit, wherein each of the character has a plurality neighboring characters on a keyboard. A plurality of string combinations are generated by the processing unit according to the neighboring characters. The storage unit is searched by the processing unit according to the string combinations to generate an address suggestion list. A handheld electronic device is disclosed herein as well.

## Description

### BACKGROUND

### Technical Field

The present disclosure relates to a device and a method to process data. More particularly, the present disclosure relates to a method and a handheld electronic device for calibrating an input of webpage address.

### Description of Related Art

Handheld electronic devices are essential communication tools for people in the modern life. Besides the voice communication, the network communication is becoming an indispensable function for the handheld electronic devices. The user can access a webpage in the internet to browse and read the content through a network module in the handheld electronic device. Before accessing the webpage, the user however has to manually input the address of the desired webpage. If the user does not touch the correct key but the neighboring keys instead, he or she has to delete the inputted character and start the inputting all over again in the handheld electronic device. Such an input procedure is annoying and time-consuming.

Accordingly, there is still a need of a method and a handheld electronic device for automatically calibrating an input of webpage address to overcome the issue described above. The present disclosure addresses such a need.

### SUMMARY

An aspect of the present disclosure is to provide a method for calibrating an input of webpage address applicable to a handheld electronic device. The handheld electronic device has a touch display unit, a storage unit for storing a plurality website address data and a processing unit, in which the processing unit is electrically connected to the touch display unit and the storage unit. The method comprises the steps outlined in the sentences that follow. At least one character is received from the touch display unit, wherein each of the character has a plurality neighboring characters on a keyboard. A plurality of string combinations are generated by the processing unit according to the neighboring characters. The storage unit is searched by the processing unit according to the string combinations to generate an address suggestion list.

Another aspect of the present disclosure is to provide a handheld electronic device. The handheld electronic device comprises a storage unit, a touch display unit and a processing unit. The storage unit stores a plurality website address data. The touch display unit receives at least one character, wherein each of the at least one character has a plurality neighboring characters on a keyboard. The processing unit is electrically connected to the touch display unit and the storage unit to generate a plurality of string combinations according to the neighboring characters and to search the storage unit according to the string combinations to generate an address suggestion list.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
FIG. 1 is a block diagram of a handheld electronic device for calibrating an input of webpage address in an embodiment of the present disclosure;
FIG. 2 a top view of the handheld electronic device depicted in FIG. 1;
FIG. 3 is a flow chart of a method for calibrating an input of webpage address in an embodiment of the present disclosure

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

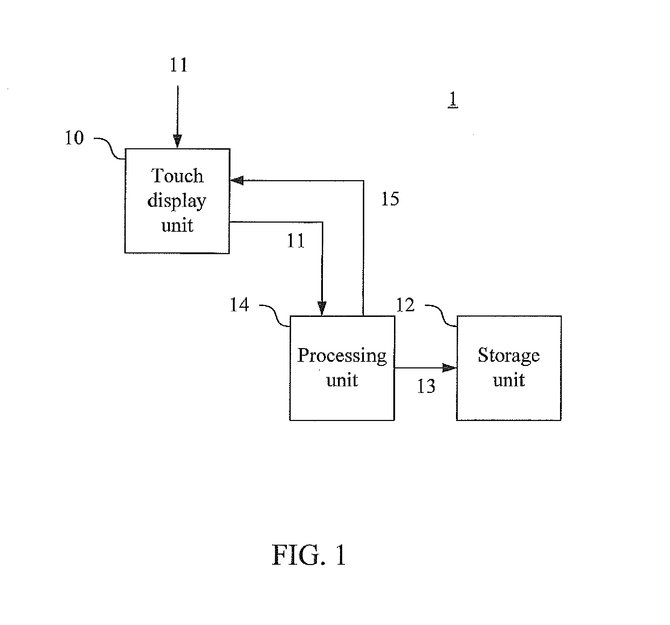

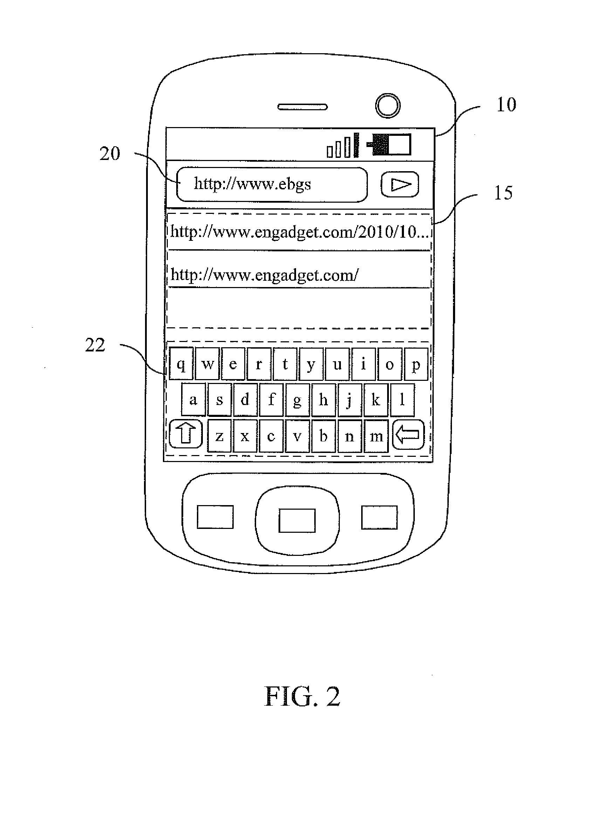

FIG. 1 is a block diagram of a handheld electronic device 1 for calibrating an input of webpage address in an embodiment of the present disclosure. FIG. 2 a top view of the handheld electronic device 1 depicted in FIG. 1. The handheld electronic device 1 comprises a touch display unit 10, a storage unit 12 and a processing unit 14.

The processing unit 16 of the handheld electronic device 1 can access the network through a network module (not shown). Before the accessing a specific webpage of the processing unit 16, the touch display unit 10 can display an input field 20 as shown in FIG. 2 such that the user can input characters in the input field 20.

In an embodiment, the touch display unit 10 displays a keyboard 22 as shown in FIG. 2 such that the user can input characters 11 through the keyboard 22, wherein the keyboard 22 is a software keyboard in the present embodiment. Each of the characters has a plurality neighboring characters on the keyboard 22. For example, the character i has four neighboring characters o, k, j and u in FIG. 2.

When the size of the handheld electronic device 1 is small, the keyboard 22 shown on the touch display unit 10 is small as well. If the user fails to touch the correct key and touches the neighboring keys instead, the character inputted in the handheld electronic device needs to be deleted such that the user can input the correct character subsequently. Such a procedure is very time-consuming.

The processing unit 14 can generate a plurality of string combinations 13 according to the neighboring characters. For example, when the inputted characters are "eb" (after neglecting the characters of "www"), twenty string combinations are generated since there are four neighboring characters w, r, d and s of the character e and there are five neighboring characters g, h, j, v and n of the character b. When four characters "ebgs" are inputted as shown in FIG. 2, the neighboring characters t, y, f, h, c, v and b of the character g and the neighboring characters w, e, a, d, z and x of the character s are taken into consideration as well. Therefore, 840 (4x5x7x6) string combinations can be generated.

The processing unit 14 further searches the storage unit 12 according to the string combinations. The storage unit 12 stores a plurality website address data. In an embodiment, each of the website address data stored in the storage unit 12 is a webpage browsing history data. In another embodiment, each of the website address data stored in the storage unit 12 is a default webpage address data. In an embodiment, the storage unit 12 can update the default webpage address data in real time or combine the default webpage address data and the webpage browsing history data to expand the amount of data. The processing unit 14 further generates an address suggestion list 15 after the searching process. In an embodiment, the website address data shown on the address suggestion list 15 is sorted according to the accessing frequency of these websites to list the address that is frequently accesses by the user first. In an embodiment, after the processing unit 14 searches the storage unit 12 according to the inputted characters "ebgs", the processing unit 14 determines that the address of "www.engadget.com" is the most possible address that the user intends to input and the address is shown on the address suggestion list 15.

As an embodiment, the touch display unit 10 is configured to further receive a selection input (not shown), wherein the selection input corresponds to a suggested URL on the address suggestion list and the processing unit 14 is able to further access a webpage corresponding to the suggested URL. For example, the user directly touches the location of the suggested URL in the address suggestion list to perform the selection.

In another embodiment, the storage unit 12 may be built in a server. The handheld electronic device 1 comprises the touch display unit 10 and the processing unit 14, and communicates to the server via a network. Thereby the embodiment may implement all functions of the aforesaid embodiment. In other words, the server is configured to implement the storage unit 12 of the aforesaid embodiment. The handheld electronic device 1 comprises the functions of the touch display unit 10 and the processing unit 14. People skilled in the art can easily understand how to implement this embodiment based on the description of the aforesaid embodiment.

In another embodiment, the storage unit 12 and the processing unit 14 may be built in a server. The handheld electronic device 1 comprises the touch display unit 10 and communicates to the server via a network. Thereby the embodiment may implement all functions of the aforesaid embodiment. In other words, the server is configured to implement the storage unit 12 and the processing unit 14 of the aforesaid embodiment. The handheld electronic device 1 comprises the functions of the touch display unit 10. People skilled in the art can easily understand how to implement this embodiment based on the description of the aforesaid embodiment.

Accordingly, by using the handheld electronic device of the present disclosure, the string combinations can be generated according to the keyboard and the data of the website address can be searched according to the string combinations to generate an address suggestion list such that the user can quickly perform the calibration by selecting the correct URL on the address suggestion list.

It is noted that in other embodiments, the calibration mechanism can be applied to physical keyboard of the handheld electronic device as well.

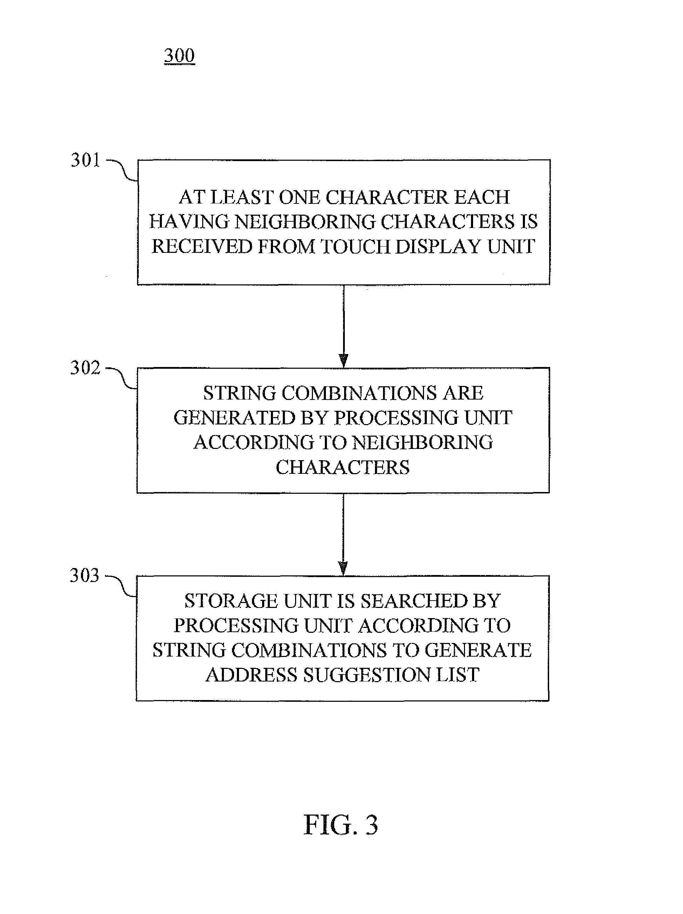

FIG. 3 is a flow chart of a method 300 for calibrating an input of webpage address in an embodiment of the present disclosure. The method 300 is applicable to the handheld electronic device 1 depicted in FIG. 1. The method 300 comprises the steps outlined below (The steps are not recited in the sequence in which the steps are performed. That is, unless the sequence of the steps is expressly indicated, the sequence of the steps is interchangeable, and all or part of the steps may be simultaneously, partially simultaneously, or sequentially performed).

In step 301, at least one character is received from the touch display unit 10, wherein each of the character has a plurality neighboring characters on a keyboard.

In step 302, a plurality of string combinations are generated by the processing unit 14 according to the neighboring characters.

In step 303, the storage unit 12 is searched by the processing unit 14 according to the string combinations to generate an address suggestion list 15.

Accordingly, by using the method of the present disclosure, the string combinations can be generated according to the keyboard and the data of the website address can be searched according to the string combinations to generate an address suggestion list such that the user can quickly perform the calibration by selecting the correct URL on the address suggestion list.

It will be apparent to those ordinarily skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A method for calibrating an input of webpage address applicable to a handheld electronic device, wherein the handheld electronic device comprises a touch display unit, a storage unit for storing a plurality website address data and a processing unit being electrically connected to the touch display unit and the storage unit, the method comprises:
receiving at least one character from the touch display unit, wherein each of the at least one character has a plurality neighboring characters on a keyboard;
generating a plurality of string combinations by the processing unit according to the neighboring characters; and
searching the storage unit by the processing unit according to the string combinations to generate an address suggestion list.

2. The method of claim 1, further comprising:
receiving a selection input from the touch display unit, wherein the selection input corresponds to a suggested URL in the address suggestion list; and
accessing a webpage corresponding to the suggested URL by the processing unit.

3. The method of claim 1, further comprising displaying the keyboard on the touch display unit, wherein the keyboard is a software keyboard.

4. The method of claim 1, wherein each of the plurality of the website address data is a webpage browsing history data.

5. The method of claim 1, wherein each of the plurality of the website address data is a default webpage address data.

6. A handheld electronic device comprising:
a storage unit for storing a plurality website address data;
a touch display unit to receive at least one character, wherein each of the at least one character has a plurality neighboring characters on a keyboard; and
a processing unit electrically connected to the touch display unit and the storage unit to generate a plurality of string combinations according to the neighboring characters and to search the storage unit according to the string combinations to generate an address suggestion list.

7. The handheld electronic device of claim 6, wherein the touch display unit further receives a selection input from the touch display unit, wherein the selection input corresponds to a suggested URL in the address suggestion list and the processing unit further accesses a webpage corresponding to the suggested URL.

8. The handheld electronic device of claim 6, wherein the keyboard is a software keyboard displayed on the touch display unit.

9. The handheld electronic device of claim 6, wherein each of the plurality of the website address data is a webpage browsing history data.

10. The handheld electronic device of claim 6, wherein each of the plurality of the website address data is a default webpage address data.
